# FASCICULE DE BREVET EUROPEEN

(11) **EP 3 385 198 B1**
(45) Date de publication et mention de la délivrance du brevet: **04.11.2020**
(21) Numéro de dépôt: 18174590.2
(22) Date de dépôt: 23.03.2015
(51) Int. Cl.: B65G 47/244

(54) **DISPOSITIF ET PROCEDE DE POSITIONNEMENT DE PRODUITS**
VORRICHTUNG UND VERFAHREN ZUR POSITIONIERUNG VON PRODUKTEN
DEVICE AND METHOD FOR POSITIONING PRODUCTS

(30) Priorité: 24.03.2014 FR 1400699
(43) Date de publication de la demande: 10.10.2018
(62) Demande divisionnaire de: 15160247.1
(73) Titulaire: Sidel Packing Solutions, 21910 Corcelles-les-Cîteaux (FR)
(72) Inventeur: BEGIN, Michel, 21910 Corcelles-les-Cîteaux (FR); DUCHEMIN, Guillaume, 21910 Corcelles-les-Cîteaux (FR); GARNIER, Thierry, 21910 Corcelles-les-Cîteaux (FR); POUTOT, Benoît, 21910 Corcelles-les-Cîteaux (FR)
(74) Mandataire: Sidel Group

(56) Documents cités:
- EP-A1- 1 020 380
- EP-A1- 1 801 014
- EP-A1- 2 135 825
- WO-A1-01/19679

## Description

La présente invention relève du domaine général du convoyage de produits, et à en particulier pour objet un dispositif et un procédé particuliers, permettant de positionner les produits, c'est-à-dire au moins d'en modifier l'orientation perpendiculairement au plan de convoyage.

Certains produits du type flacon présentent des faces aplaties au niveau de leur paroi latérale, notamment pour y apposer une étiquette de présentation d'informations sur leur contenu. De tels flacons, ou produits, ont ainsi un axe principal qui est vertical lorsque les produits sont positionnés debout sur un support plan. Ils présentent également éventuellement une section de forme oblongue dans le plan de convoyage.

Suivant la façon dont ces produits sont positionnés, on peut ainsi être en mesure de lire, ou non, lesdites informations qui se trouvent sur leurs faces aplaties. Leur orientation sur les présentoirs est donc importante pour les commerçants et les consommateurs. L'orientation des produits une fois en caisses est aussi un facteur important pour l'optimisation du volume desdites caisses.

On connait des installations permettant de réaliser des présentoirs de tels produits, dans lesquels les produits sont alignés les uns derrière les autres, formant une ou plusieurs rangées.

Pour que les produits soit tous correctement orientés, des dispositifs d'orientation des produits ont été mis en œuvre dans les installations pour faire tourner les produits autour d'un axe perpendiculaire au plan de convoyage, à savoir un axe vertical.

Le document FR 2 285 303 décrit ainsi une installation équipée d'un dispositif d'orientation des produits. L'installation comporte un convoyeur sans fin sur lequel lesdits produits sont alignés les uns derrière les autres, le convoyeur sans fin présentant une direction d'amenée et un sens d'amenée desdits produits. L'installation est équipée notamment d'une vis sans fin permettant la mise au pas des produits et une orientation donnée. L'orientation que prennent les produits dans la vis peut être conforme ou non conforme à l'orientation souhaitée. Aussi, en aval de la vis sans fin, il est prévu un dispositif d'orientation qui assure le pivotement du produit à 180 degrés. Une telle installation présente certains inconvénients parmi lesquels on peut citer les suivants :
- la vis utilisée pour orienter les produits et pour les mettre au pas présente des dimensions adaptées aux produits. Aussi, quand les types de produits traités changent de formes ou de dimensions, il est nécessaire de changer les vis. Or, un changement de vis nécessite d'immobiliser l'installation, ce qui nuit à la productivité générale de l'installation. Dans certaines applications, il peut être nécessaire de proposer une solution alternative aux vis ;
- de plus, il est nécessaire de prévoir une zone de stockage, à proximité de l'installation, pour le stockage des vis sans fin adaptées aux différents produits à orienter. L'installation globale peut ainsi s'avérer excessivement encombrante ;
- l'installation comportant plusieurs vis peut s'avérer onéreuse, du fait qu'il est nécessaire de prévoir plusieurs vis différentes ;
- enfin, l'orientation en statique en aval d'une vis risque de déstabiliser ou de marquer les produits et de ce fait ne permet pas de fonctionner à haute cadence.

Le document WO01/19679 décrit un dispositif de positionnement pour positionner des produits selon le préambule de la revendication 1 et un procédé pour positionner des produits selon préambule de la revendication 7.

De façon générale, l'invention a pour objectif de proposer une alternative technique permettant d'orienter les produits, c'est-à-dire de les faire tourner sur le convoyeur, d'un angle quelconque, de façon à ce que les produits soient orientés différemment avant et après la mise en œuvre de l'invention. L'invention vise en outre à proposer une alternative à l'utilisation des vis sans fin, afin de pallier les inconvénients précités.

A cet effet l'invention propose de réaliser l'orientation des produits en manipulant chaque produit séparément, à l'aide d'un actionneur dédié audit produit et se déplaçant transversalement à la direction de convoyage.

L'invention a ainsi pour objet un dispositif de positionnement pour positionner des produits simultanément à leur convoyage les uns derrière les autres dans un plan de convoyage et le long d'une direction de convoyage.

Ce dispositif est selon la revendication 1.

L'invention a aussi pour objet un procédé pour positionner des produits simultanément à leur convoyage les uns derrière les autres dans un plan de convoyage et le long d'une direction de convoyage, comprenant une étape d'orientation, lors de laquelle les produits sont tournés autour d'un axe perpendiculaire au plan de convoyage.

Ce procédé est selon la revendication 7.

L'invention sera mieux comprise grâce à la description ci-dessous, qui se base sur des modes de réalisations possibles, expliqués de façon illustrative et nullement limitative, en référence avec les figures annexées suivantes:
- la figure 1 montre une vue de dessus, dans le plan de convoyage, d'un dispositif dans deux états différents, à savoir soit avant le pvotement, soit après ;
- la figure 2 illustre un dispositif où les produits sont orientés grâce à des poussoirs indépendants actionnés par un même vérin de chaque côté, la figure 2a illustrant la situation avant l'orientation, la figure 2b la situation pendant l'orientation, et la figure 2c la situation après le groupage ;
- la figure 3 montre une réalisation où les produits sont orientés puis groupés grâce à des poussoirs indépendants ;
- la figure 4 compare le positionnement des moyens d'orientation selon un schéma de référencement et des produits, pour expliquer la notion de produit le plus en avance ou en retard ;
- la figure 5 montre enfin deux produits de section oblongue sur un convoyeur, le produit le plus en haut ayant sa grande longueur dans le sens de convoyage, le produit le plus en bas ayant sa grande longueur transversale au sens de convoyage.

L'invention a ainsi pour objet un dispositif de positionnement 1 pour positionner des produits 2 simultanément à leur convoyage les uns derrière les autres dans un plan de convoyage 3 et le long d'une direction de convoyage 4. Les produits 2 peuvent être espacés les uns des autres de façon plus ou moins régulière. Ils sont généralement disposés les uns derrière les autres longitudinalement, c'est-à-dire dans la direction de convoyage 4.

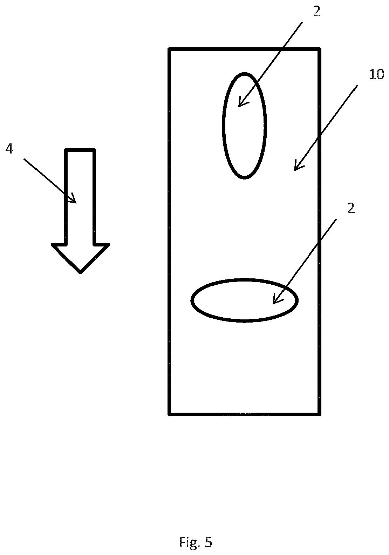

Les produits 2 présentent généralement une forme particulière illustrée la figure 5 : la forme des produits n'est pas une forme résultant d'une symétrie de révolution autour d'un axe vertical. Les produits 2 sont alors des flacons ou autres présentant une forme oblongue, c'est-à-dire une forme plus longue que large.

Selon la description, le dispositif de positionnement 1 comprend au moins un moyen d'orientation 5, comprenant lui-même au moins un poussoir 6 mobile le long d'un mouvement d'action entre une position inactive et une position active, ledit mouvement d'action ayant pour effet d'agir sur un produit 2 en le poussant pour le faire pivoter d'un angle prédéterminé autour d'un axe perpendiculaire au plan de convoyage 3, le au moins un poussoir 6 étant mobile aussi dans la direction de convoyage 4. Le moyen d'orientation 5 assure donc à lui seul l'orientation du produit 2.

Les poussoirs 6 peuvent être montés dans des chariots 7, et ce de façon fixe longitudinalement. Ainsi, dans des modes de réalisation particuliers, le au moins un poussoir 6 est monté fixé dans la direction de convoyage 4 dans un chariot 7, lui-même mobile dans la direction de convoyage 4.

Selon une caractéristique additionnelle possible, le au moins un moyen d'orientation 5 comprend une paire de poussoirs 6 similaires et placés en vis-à-vis l'un de l'autre, de sorte à agir ensemble sur le même produit 2, ce qui permet d'avoir une action symétrique sur le produit 2.

Les dispositifs selon l'invention peuvent être amenés à traiter des produits 2 dissymétriques, comme illustrés à la figure 5. La longueur d'un tel produit 2, mesurée dans la direction de convoyage 4, change alors en fonction de son orientation et l'action des poussoirs 6 peut alors être impossible après une première rotation s'ils ne peuvent se resserrer contre le produit 2. Ainsi, dans des modes de réalisation avantageux, la distance entre les deux poussoirs 6 de la paire du au moins un moyen d'orientation 5 est ajustable dans la direction de convoyage 4, grâce à une mobilité dans ladite direction d'au moins l'un des deux poussoirs 6, de sorte à compenser la variation de dimension du produit 2 suite à son orientation par pivotement autour d'un axe perpendiculaire au plan de convoyage 3.

On comprendra qu'il est avantageux que le dispositif soit capable de traiter plusieurs produits 2 à chaque cycle. Il est alors muni de plusieurs moyens d'orientation 5, alignés les uns après les autres dans la direction de convoyage 4. Chaque moyen d'orientation 5 comprend ainsi deux poussoirs 6 et ils sont alors répartis alignés les uns après les autres, une moitié d'entre eux étant disposée d'un côté de la file de produits 2, l'autre moitié étant disposée de l'autre côté. Les poussoirs 6 côte à côte peuvent alors être régis par l'action d'un seul et unique actionneur, ou être régis par chacun leur actionneur. Ainsi, dans des modes de réalisations particuliers, le dispositif de positionnement 1 comprend au moins une paire de moyens d'orientation 5, montés côte à côte dans la direction de convoyage 4, les poussoirs 6 côte à côte étant entraînés par le même actionneur. Dans d'autres modes de réalisation, le dispositif de positionnement 1 comprend au moins deux moyens d'orientation 5 montés côte à côte dans la direction de convoyage 4, les poussoirs 6 côte à côte étant entraînés par des actionneurs pilotables indépendamment.

Le positionnement relatif des moyens d'orientation 5, ou encore leur séquence d'actionnement doit être adapté ou adaptée à la position des produits 2 sur le convoyeur 10. En effet, les produits 2 arrivent les uns après les autres, avec un espacement plus ou moins répétable, dans une cecrtaine plage de précision. Dans des cas extrêmes, les produits peuvent être espacés de façon complètement aléatoires, sans qu'une forme de répétition puisse être identifiée. Il est donc nécessaire d'identifier la position des produits 2 et leur écartement réciproque avant de les orienter. Ainsi, selon une caractéristique additionnelle possible, le dispositif de positionnement 1 comprend une cellule de détection 9, montée en amont du au moins un moyen d'orientation 5 dans la direction de convoyage 4, pour détecter unitairement chaque produit 2 à orienter, ainsi qu'une unité de contrôle pour recevoir le signal de ladite cellule 9 et conditionner le fonctionnement du dispositif.

L'invention a aussi pour objet un procédé mettant en œuvre le dispositif qui vient d'être décrit, à savoir un procédé pour positionner des produits 2 simultanément à leur convoyage les uns derrière les autres dans un plan de convoyage 3 et le long d'une direction de convoyage 4, comprenant une étape d'orientation, lors de laquelle les produits 2 sont tournés autour d'un axe perpendiculaire au plan de convoyage 3.

Ce procédé est caractérisé en ce que ladite étape d'orientation s'effectue en déplaçant au moins un poussoir 6 le long d'un mouvement d'action, entre une position inactive et une position active, ledit mouvement d'action ayant pour effet d'agir sur un produit 2 en le poussant pour le faire pivoter d'un angle prédéterminé autour d'un axe perpendiculaire au plan de convoyage 3, ledit mouvement d'action étant notamment parallèle au plan de convoyage 3 et perpendiculaire à la direction de convoyage 4. Ce mouvement permet d'obtenir directement l'orientation souhaitée des produits 2, sans avoir besoin de recourir à une vis, par exemple.

Dans des réalisations avantageuses, le procédé comprend, en outre, une étape de positionnement longitudinal des produits 2, dans la direction de convoyage 4, de sorte à les positionner les uns par rapport aux autres à une distance prédéfinie, comme par exemple par groupe, ou à une distance similaire et régulière les uns des autres, à savoir pour une mise au pas. Cette étape de positionnement longitudinal est notamment mise en œuvre en déplaçant le ou les poussoirs 6, dans la direction de convoyage 4, des poussoirs 6 intermédiaires pouvant aussi revenir en position inactive en laissant des poussoirs 6 d'extrémité en position active délimiter un groupe de produits 2 en contact entre eux. Lesdits poussoirs 6 intermédiaires peuvent aussi revenir entre les produits en contact pour les stabiliser.

Dans certains modes de réalisation, les poussoirs 6 sont tous positionnés de la même façon que les produits 2 sont positionnés sur le convoyeur 10, et ce grâce à une cellule de détection 9, et ils sont tous actionnés en même temps en position active. L'actionnement des poussoirs 6 en position active assure le pivotement des produits 2 autour d'un axe perpendiculaire au plan de convoyage 3.

En position active, après pivotement des produits 2, les poussoirs 6 formés par des doigts se trouvent ainsi positionnés entre les produits 2 orientés, de sorte que lesdits doigts peuvent être utilisés de la même façon que des éléments d'un moyen de groupage : en déplaçant les poussoirs 6 longitudinalement, les doigts sont déplacés et viennent pousser les produits 2, créant des espaces et des groupes de produits 2. Dans certaines réalisation, les doigts se présentent sous la forme de pièce coudée.

Le dispositif est ainsi avantageusement muni d'une cellule 9, placée en amont des moyens d'orientation 5, ainsi que d'un module de mesure de la position des produits 2 sur le convoyeur 10. Le module communique éventuellement avec un dispositif de commande du déplacement longitudinal des moyens d'orientation 5, de sorte qu'ils se positionnent suivant le même schéma de répartition que les produits 2 sur le convoyeur 10.

Quand tous les produits éspacés aléatoirement arrivent au niveau des moyens d'orientation 5, toutes les paires de poussoirs 6 sont actionnées en même temps en position active, pour que les produits 2 soient orientés en même temps en pivotant par exemple d'un angle de 90°.

Ainsi, dans certains modes de réalisation, la position des produits 2 successifs est détectée en amont de l'étape d'orientation, le procédé comprenant une étape consistant essentiellement à positionner de façon correspondante dans la direction de convoyage 4 une pluralité de poussoirs 6 se trouvant côte à côte, et ce avant leur actionnement entre leur position inactive et leur position active.

Selon une caractéristique additionnelle possible, l'étape d'orientation est mise en œuvre lorsque le produit 2 arrive dans une zone fixe prédéfinie, c'est-à-dire une zone immobile par rapport au bâti sur lequel circule le convoyeur 10. Lorsqu'un produit 2 se trouve dans une telle zone prédéfinie, que sa présence y ait été détectée ou calculée suite à la détection amont, le moyen d'orientation 5 correspondant est actionné.

Selon l'invention, le procédé comprend une étape de positionnement d'un chariot 7, comprenant plusieurs poussoirs 6 les uns à côté des autres dans la direction de convoyage 4, dans une position telle que qu'un premier poussoir 6 se trouve en vis-à-vis d'un produit 2 à orienter, en particulier le plus en avance ou le plus en retard conformément à un schéma de référencement,
le chariot 7 étant ensuite déplacé dans la direction de convoyage 4 et l'au moins un autre poussoir 6 actionné dès lors qu'il se trouve en vis-à-vis d'un autre produit 2.

Enfin, dans des modes de réalisation particuliers, le procédé comprend une étape consistant à décaler les produits 2 transversalement à la direction de convoyage 4 sous l'effet de l'action du au moins un poussoir 6.

Par exemple, alternativement, après groupage des produits 2 ou mise au pas, les poussoirs 6 d'un chariot 7 sont à nouveau avancés transversalement, tandis que les poussoirs 6 en vis-à-vis sur l'autre chariot 7 sont reculés en étant déplacés transversalement de la même distance. En alternant le mouvement d'avancement supplémentaire des poussoirs 6 d'un chariot 7 pour un premier groupe, et de l'autre chariot pour le groupe suivant, on obtient des groupes de produits 2 réorientés situés d'un côté puis de l'autre d'une ligne centrale du convoyeur 10.

Ainsi, les produits 2 peuvent être orientés, et éventuellement groupés, en même temps qu'ils sont déplacés par le convoyeur 10.

Le procédé, selon la description, peut donc se dérouler de la façon suivante. Le convoyeur 10 sans fin est déplacé suivant une vitesse constante, nommée vitesse d'amenée, Va. Pour orienter les produits 2, les chariots 7 sont également déplacés à une première vitesse V1 qui est sensiblement identique à la vitesse d'avance Va du convoyeur, au moins pour positionner un produit 2 en face d'un moyen d'orientation 5. Les produits sont orientés de la façon suivante :
- tout d'abord, au moins un produit 2 est positionné en face d' un moyen d'orientation 5,
- les poussoirs 6 passent de la position inactive à la position active, ce qui entraîne l'orientation du produit 2 par pivotement autour d'un axe perpendiculaire au plan de convoyage 3,
- puis, la paire de poussoirs 6 passe de sa position active à sa position inactive, pour libérer le produit 2 orienté.

Comme le pivotement se fait en même temps que le chariot 7 avance à une vitesse V1, lorsque les produits 2 sont orientés et libérés, le chariot 7 se trouve en aval de sa position initiale.

Aussi, après libération des produits 2 orientés, le chariot 7 est déplacé en sens inverse du sens d'amenée des produits 2, à une seconde vitesse V2 qui est supérieure à la vitesse V1, de manière à permettre l'alignement du premier produit 2 de la file en face du premier moyen d'orientation 5, au niveau de la position initiale du chariot 7.

Dans le cas d'une installation où les moyens d'orientation 5 assurent le déplacement des groupes de produits 2 orientés jusqu'à un point de prise, c'est-à-dire un poste aval de l'installation où le groupe est saisi pour être encaissé, par exemple, les moyens d'orientation 5 sont déplacés jusqu'au point de prise à une vitesse V3, supérieure à la vitesse V1, ou à la vitesse d'amenée Va des produits. Puis, le dispositif libère le groupe de produits 2 au point de prise et retourne en position initiale avec un mouvement de vitesse V2.

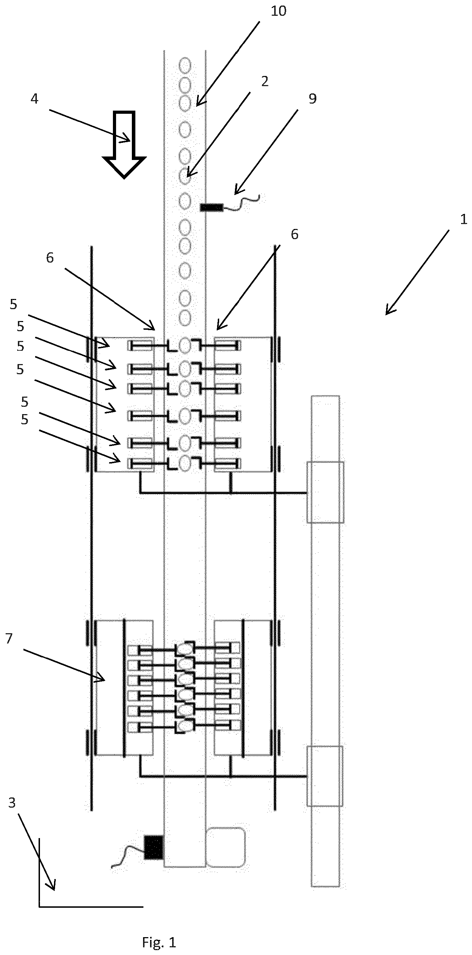

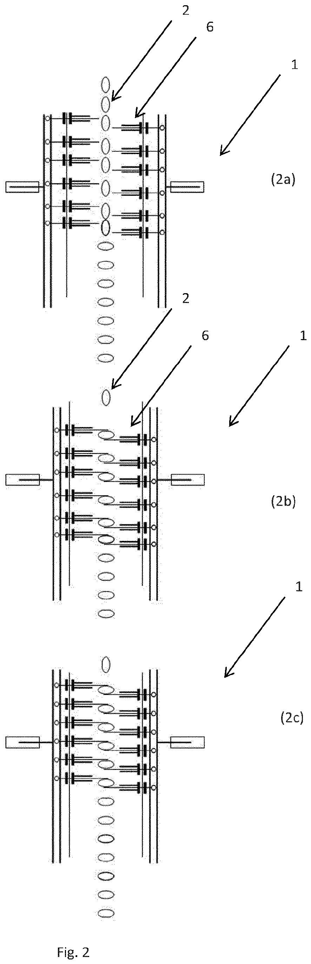

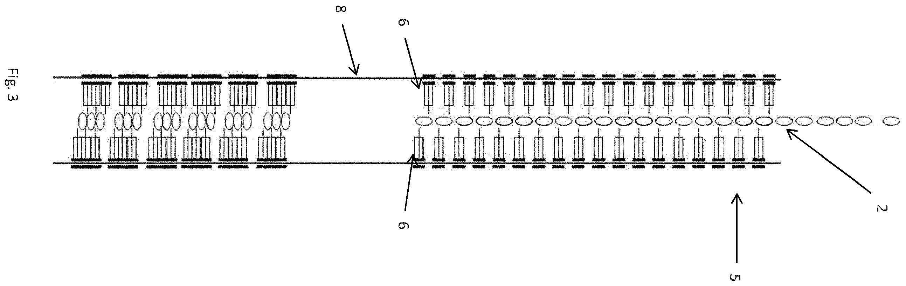

Dans un grand nombre de réalisations, comme celles illustrées dans les figures 1 à 3, le dispositif de positionnement 1 selon l'invention est capable de traiter plusieurs produits 2 à chaque fois et est donc muni de plusieurs moyens d'orientation 5, chacun traitant un produit 2. Ces moyens d'orientation 5 sont montés côte à côte dans la direction de convoyage 4, et sont, chacun, destinés à agir sur un produit 2 différent entraîné par le convoyeur 10.

La rotation d'un produit 2 peut ainsi être obtenue par l'action d'un seul poussoir 6, pour peu qu'une butée soit ménagée en vis-à-vis, légèrement décalée pour obtenir l'effet souhaité. Dans ces cas, le moyen d'orientation 5 ne comprend donc qu'un seul poussoir 6, et une butée en vis-à-vis, décalée suffisamment pour créer une rotation.

Préférentiellement, le mouvement de pivotement d'un produit 2 autour d'un axe perpendiculaire au plan de convoyage 3 est toutefois obtenu sous l'effet de deux poussoirs 6 mobiles montés l'un en vis-à-vis de l'autre. Le moyen d'orientation 5 comprend alors une paire de poussoirs 6 qui sont légèrement décalés dans la direction de convoyage 4, de sorte qu'ils agissent chacun d'un côté du produit 2 pour en créer le mouvement de pivotement attendu. Deux poussoirs 6 ainsi opposés créent alors des forces parallèles, de sens opposés, préférablement parallèles au plan de convoyage 3 et perpendiculaires à la direction de convoyage 4, pouvant avoir pour effet de faire pivoter le produit 2 autour d'un axe perpendiculaire au plan de convoyage 3.

Une telle réalisation permet, lors de l'action des poussoirs 6, de ne pas décaler le produit 2 transversalement à la direction de convoyage 4. Dans certains cas, les deux poussoirs 6 peuvent alors être actionnés lorsque le produit 2 se trouve dans une position symétrique par rapport à un axe situé à égale distance des directions d'action des poussoirs 6, ces derniers ayant des actions d'amplitude et de force préférablement similaires.

De façon générale, que l'action sur un produit 2 se fasse avec un poussoir 6 ou plusieurs, le principe est bien d'agir sur le produit 2 en créant au moins deux forces dont les directions ne se superposent pas et qui, ensemble, provoquent un mouvement comprenant une rotation autour d'un axe perpendiculaire au plan de convoyage 3. Cela permet d'exercer une force d'entraînement sur le produit 2, avec au moins une composante parallèle au plan de convoyage 3 alors qu'il repose contre une butée décalée, fixe ou elle-même mobile. Dans des réalisations avantageuses grâce à leur simplicité, chaque moyen d'orientation 5 comprend une paire de poussoirs 6 destinés à agir, chacun, d'un côté du produit 2, le long d'un mouvement de translation perpendiculaire à la direction de convoyage 4 et parallèle au plan de convoyage 3.

Comme l'action du poussoir 6 sur le produit 2 nécessite un certain temps, le poussoir 6 doit pouvoir être déplacé dans la direction de convoyage 4, pour suivre le déplacement que subit le produit 2 pendant la durée de l'action du poussoir 6 et éviter ainsi qu'il ne forme un obstacle qui risque de faire chuter le produit 2 ou de le déformer. Cette liberté de déplacement dans la direction de convoyage 4 peut être aménagée de différentes façons.

Dans des modes de réalisation possibles, la mobilité longitudinale du poussoir 6 est assurée par un chariot 7 dans lequel le poussoir 6 est monté. Ce chariot 7 est, quant à lui, monté avec une capacité de mouvement longitudinal de sorte à pouvoir se déplacer sensiblement à la même vitesse que le convoyeur 10. Le chariot 7 est ainsi monté sur une glissière fixe. Bien entendu, le dispositif de positionnement 1 comprend alors préférentiellement deux tels chariots 7, la colonne de produits 2 circulant entre eux. Dans les cas préférés où chaque produit 2 est pivoté par l'action d'une paire de poussoirs 6, l'ensemble des poussoirs 6 est réparti, pour une moitié, sur l'un des deux chariots 7, et, pour l'autre moitié, sur l'autre chariot 7. Les produits 2 sont donc entraînés dans leur rotation par chaque fois une paire de poussoirs 6, chacun d'eux étant monté dans l'un des chariots 7.

Un tel montage peut être adapté en prévoyant que les poussoirs 6 soient montés mobiles dans les chariots 7 parallèlement à la direction de convoyage 4. La mobilité longitudinale des poussoirs 6 est alors assurée, d'une part, par la mobilité des chariots 7 sur lesquels ils sont montés, et, d'autre part, par la mobilité de leur montage sur ces chariots 7. Un des avantages d'un tel montage par rapport au précédent est notamment, comme il sera encore décrit plus loin, de pouvoir, d'une part, déplacer les chariots 7 essentiellement à la même vitesse que le convoyeur 10, et, d'autre part, de déplacer les poussoirs 6 pour réaliser une fonction de groupage, mise ou pas, ou toute autre fonction de positionnement longitudinal prédéterminé des produits 2. Les réglages des deux fonctions peuvent alors être indépendants.

Dans les deux cas qui viennent d'être décrits, les chariots 7 peuvent former une seule et même structure mobile.

Dans un autre type de réalisation, les poussoirs 6 sont montés chacun sur une glissière 8 longitudinale fixe par rapport au bâti. A la différence des montages précédents où les poussoirs 6 sont montés dans des chariots 7 dont le mouvement permet éventuellement de suivre l'avance des produits 2, seule la mise en mouvement des poussoirs 6 permet ici d'éviter de créer une butée pour l'avance des produits 2. Un des avantages d'une telle réalisation est bien entendu que chaque poussoir 6, ou chaque paire de poussoirs 6 agissant ensemble sur un même produit 2, peut être piloté ou pilotée indépendamment.

Le mouvement d'un poussoir 6 est provoqué par un actionneur piloté. Ainsi, le poussoir 6 peut par exemple être une tige d'un vérin. Dès lors que le dispositif de positionnement 1 traite plusieurs produits 2, il est muni de plusieurs moyens d'orientation 5, un par produit 2 à traiter. Le dispositif de positionnement 1 peut alors présenter une série de poussoirs 6 alignés dans la direction de convoyage 4, voire une deuxième série en vis-à-vis. L'actionnement des poussoirs 6 côte à côte peut être le même, à savoir que, par construction, ils sont tous animés du même mouvement en même temps. Cela peut par exemple être le cas lorsque les poussoirs 6 sont tous montés sur une embase reliée à la tige d'un seul vérin. Dans ce cas, le mouvement de ce vérin unique définit le mouvement de chaque poussoir 6.

Alternativement, chaque poussoir 6 peut, par construction, être animé d'un mouvement différent des autres. Cela peut être le cas lorsqu'un vérin indépendant est associé à chaque poussoir 6. Le pilotage de chaque vérin peut alors être indépendant, et chaque poussoir 6 peut être animé d'un mouvement différent. En particulier, les poussoirs 6 adjacents peuvent passer de leur position inactive à leur position active à des instants différents, en fonction, comme il sera encore décrit plus loin, d'un espacement détecté des produits, par exemple.

En entrée du dispositif de positionnement 1, l'espacement entre les produits 2 est difficilement prévisible de façon stricte. En effet, même en présence d'un éventuel équipement amont destiné à espacer les produits 2 de façon régulière, les distances entre deux produits 2 successifs sont généralement comprises dans un intervalle de tolérance, notamment plus ou moins 10% d'un valeur médiane. Le bon fonctionnement du dispositif de positionnement 1 nécessite alors d'identifier de façon précise la position relative des produits 2, en particulier dès lors que le dispositif de positionnement 1 est apte à traiter plusieurs produits 2 et comprend donc plusieurs moyens d'orientation 5 dont la position relative et/ou les instants de déclenchement des mouvements d'action respectifs doivent être maîtrisés, dans le but d'agir de façon synchronisée dans le temps et/ou l'espace avec l'enchaînement des produits 2. Ainsi, le dispositif comprend à cet effet une cellule de détection 9, placée en amont du au moins un moyen d'orientation 5, qui permet de détecter la présence successive de produits 2 sur le convoyeur 10. La cellule de détection 9 est reliée à une unité de contrôle qui traite le signal généré et pilote en conséquence la pluralité de moyens d'orientation 5, et détermine notamment la position relative des produits 2 en entrée.

Les configurations où le dispositif de positionnement 1 peut traiter plusieurs produits 2 présentent l'avantage de pouvoir travailler à des cadences plus élevées. En effet, l'opération de pivotement autour d'un axe perpendiculaire au plan de convoyage 3 nécessite un certain temps, et il est donc plus efficace d'avoir plusieurs cycles de positionnement simultanés ou au moins qui se superposent dans le temps.

Des procédés possibles de mise en œuvre d'un tel dispositif vont maintenant être décrits.

Un premier procédé consiste essentiellement à positionner les poussoirs 6 les uns par rapport aux autres de sorte à reproduire le positionnement relatif de la pluralité de produits 2 que le dispositif de positionnement 1 doit traiter. Ce positionnement des produits 2 tel qu'ils arrivent dans le dispositif de positionnement 1 est détecté grâce à la cellule de détection 9 déjà décrite par ailleurs.

Les moyens d'orientation 5 successifs sont donc déplacés les uns par rapport aux autres de sorte que chaque produit 2 de la pluralité à traiter arrive en même temps au niveau du moyen d'orientation 5 qui lui est destiné : le premier produit 2 de la série à traiter arrive en vis-à-vis du premier moyen d'orientation 5 en même temps que le deuxième produit 2 de la série arrive en vis-à-vis du deuxième moyen d'orientation 5, etc. Il est alors possible de provoquer simultanément les mouvements d'action des différents moyens d'orientation 5, ce qui permet d'utiliser un seul et même actionneur qui pilote l'ensemble des poussoirs 6 d'un même côté, voire des deux. Pour mettre en œuvre ce procédé, les moyens d'orientation 5 doivent donc avoir une possibilité de mouvement relatif dans la direction de convoyage 4.

Un tel procédé comprend donc une étape de détection de la position relative d'une série de produits 2 à traiter, une étape de positionnement relatif des moyens d'orientation, et une étape lors de laquelle les poussoirs 6 passent de la position inactive à la position active. Lors de l'étape d'orientation proprement dite, les moyens d'orientation 5 doivent préférablement se déplacer dans le sens longitudinal, ce qui peut se faire, d'une part, grâce au montage des moyens d'orientation 5 libre en déplacement le long de la direction de convoyage 4, sur une glissière 8 fixe ou sur un chariot 7 mobile de la même façon, ou, d'autre part, grâce au chariot 7 dans lequel ils sont montés fixes longitudinalement et qui est mobile dans la direction de convoyage 4.

Une fois l'orientation effectuée, une étape de positionnement longitudinal peut être mise en œuvre, comme décrit plus loin. Le cycle se termine par le passage des poussoirs 6 de leur position active à leur position inactive, puis leur retour en position, qui revient à leur faire subir un mouvement inverse à celui qu'ils ont subi pour suivre l'avancement des produits 2 sur le convoyeur 10.

Dans un tel procédé, l'irrégularité du positionnement relatif des produits 2 est ainsi gérée par un déplacement relatif des moyens d'orientation 5, qui peuvent ensuite être manœuvrés simultanément. Dans d'autres procédés décrits ci-dessous, cette irrégularité peut être gérée en actionnant les moyens d'orientation 5 à des instants différents.

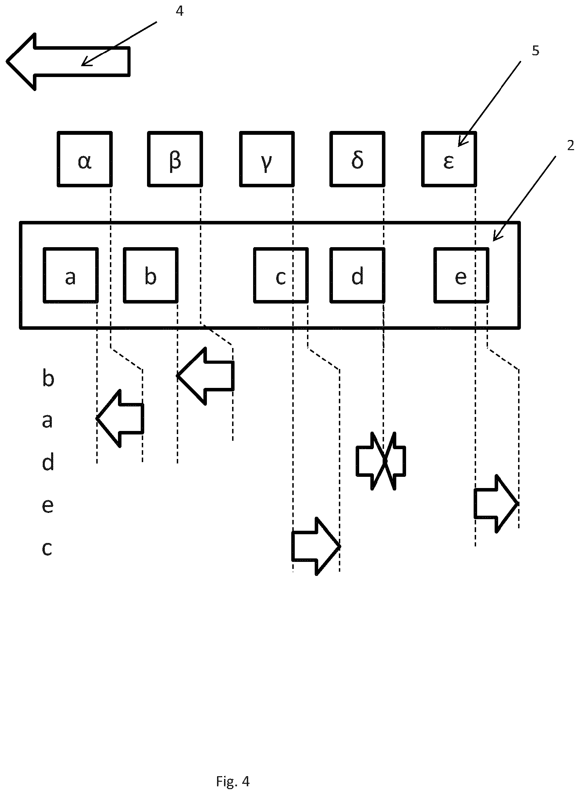

La figure 4 annexée permet d'illustrer la notion de produit le plus en avance et produit le plus en arrière. Dans ce cas, le dispositif de positionnement 1 est conçu pour traiter cinq produits, référencés sur la figure de a à e. Le dispositif comprend à cet effet cinq moyens d'orientation 5 correspondants, référencés α à ε : α pour traiter le produit a, β pour traiter le produit b, γ pour traiter le produit c, δ pour traiter le produit d et ε pour le produit e. La position des moyens d'orientation 5 suit donc le schéma de référencement souhaité.

La distance entre un produit 2 et le moyen d'orientation 5 correspondant est repérée à partir du moyen d'orientation 5, dans le sens du convoyage 4. Le produit 2 pour lequel cette distance est la plus élevée est donc le produit le plus en avance, et le produit pour lequel cette distance est la plus faible, éventuellement négative, est le produit le plus en arrière. On comprendra que le classement des produits ne dépend pas de la position relative entre, d'une part, la série de produits, et, d'autre part, la série de moyens d'orientation 5 dans leur schéma de référencement. Dans le cas de la figure, le produit b est celui le plus en avance, puis le produit a, d, e et le produit le plus en arrière est c.

Ainsi, dans ce cas particulier, et tant que les moyens d'orientation 5 ne peuvent pas être déplacés les uns par rapport aux autres dans la direction de convoyage 4 mais uniquement actionnés indépendemment, cet ensemble de moyens d'orientation 5 est déplacé de sorte qu'un moyen d'orientation 5 arrive en vis-à-vis soit du produit le plus en avance, soit du produit le plus en arrière, par exemple pour le produit b et le moyen d'orientation β. Pour terminer l'orientation, il suffit ensuite de continuer à déplacer l'ensemble des moyens d'orientation 5 par rapport à l'ensemble des produits 2 pour que les autres moyens d'orientation 5 viennent les uns après les autres en vis-à-vis du produit correspondant, jusqu'à finir, soit avec le produit le plus en avance, soit avec le produit le plus en arrière, par exemple le produit c et le moyen d'orientation γ. Bien entendu, il est possible de commencer avec n'importe quel produit, puis de piloter en conséquence la vitesse des moyens d'orientation 5.

De façon générale, les produits sont donc orientés en commençant par placer l'ensemble des moyens d'orientation 5, immobiles entre eux, de sorte que l'un d'eux arrive en vis-à-vis d'un produit d'extrémité, comme le produit le plus en avance, ou, respectivement, le plus en arrière, puis ensuite en déplaçant cet ensemble de moyens d'orientation 5 de sorte qu'ils arrivent successivement en vis-à-vis d'un des autres produits pour l'orienter, jusqu'à ce que l'ensemble des moyens d'orientation 5 se trouve dans une position telle que l'un d'eux est en vis-à-vis de l'autre produit d'extrémité, comme le produit le plus en arrière, ou, respectivement, le plus en avance. En fonction des cas, l'ensemble des moyens d'orientation 5 se déplace donc, par rapport à l'ensemble des produits 2 à traiter, soit dans le même sens que les produits sur le convoyeur 10, soit dans le sens opposé.

Dans le cas de la figure 4, il est donc possible de placer les moyens d'orientation 5 de sorte que l'un d'eux soit en vis-à-vis du produit b et l'oriente, puis de les déplacer pour que l'orientation se fasse successivement pour les produits a, d, e, et enfin le produit le plus en arrière, le produit c.

A l'inverse, il est possible de commencer par le produit le plus en arrière, le produit c, et de déplacer l'ensemble des moyens d'orientation 5 pour orienter successivement les produits e, b, a, et d, lorsque les moyens d'orientation 5 respectifs sont successivement en vis-à-vis, à savoir ε, β, α, puis δ.

Si l'opération débute par le produit b, les moyens d'orientation 5 devront se déplacer en sous vitesse par rapport au flux pour que les autres produits soient successivement orientés. A l'inverse, si l'opération débute par le produit c, les moyens d'orientation 5 devront se mettre en survitesse pour les autres. Le plus avantageux en terme de temps de cycle est de commencer par celui le plus en arrière, et de récolter les autres avec une survitesse. Il faut cependant être sûr d'avoir autant de produit que de moyens d'orientation 5, pour assurer d'avoir des lots complets.

Ce mode de réalisation du procédé est particulièrement adapté aux cas où les moyens d'orientation 5 sont montés fixes sur des chariots 7 mobiles : il suffit en effet alors d'appliquer la logique décrite ci-dessus en pilotant, d'une part, la position initiale des chariots 7, puis leur mouvement, et, d'autre part, les instants auxquels les moyens d'orientation 5 sont actionnés.

Dans un autre mode de réalisation du procédé, les différents moyens d'orientation 5 sont actionnables indépendamment et peuvent être animés l'un par rapport à l'autre d'un mouvement le long de la direction de convoyage 4. Chacun est actionné dès lors qu'un produit 2 arrive en vis-à-vis de lui, ce qui est identifié grâce à une cellule de détection 9 en amont. Chaque moyen d'orientation 5 est donc successivement manœuvré, en fonction du débit de produit 2. Il est ainsi possible de réaliser la fonction d'orientation même pour les cas où les produits 2 arrivent avec un espacement aléatoire entre eux. La vitesse de déplacement longitudinal du moyen d'orientation 5 peut être celle du convoyeur 10, ou peut être différente ce qui permet, par exemple, de retenir les produits 2 jusqu'à en avoir collecté et groupé un nombre prédéterminé.

Le procédé selon l'invention peut, en outre, comprendre une étape supplémentaire au cours de laquelle les produits 2 traités sont placés, le long de la direction de convoyage 4, selon un schéma prédéfini dans la direction de convoyage 4. Les moyens d'orientation 5 forment en effet deux butées, chacune d'un côté du produit 2 dans la direction de convoyage 4. En déplaçant un moyen d'orientation 5 dans la direction de convoyage 4, il est donc possible, lorsqu'il est en position active, d'avancer ou de reculer séparément un produit 2.

Une telle étape permet donc de réaliser des groupes de produit 2, ou encore de les mettre au pas, c'est-à-dire de les espacer les uns des autres avec une distance prédéfinie et répétée. Dans les cas où le mouvement longitudinal des moyens d'orientation 5 est utilisé pour faire des groupes de produits 2, il peut être avantageux d'escamoter dans leur position inactive les poussoirs 6 qui arrivent entre deux produits 2. Les produits 2 d'un même groupe peuvent alors être au contact les uns des autres, ce qui n'est pas possible si les moyens d'orientation 5 s'étendent transversalement entre les produits 2. Le groupe de produits 2 est alors retenu entre deux poussoirs 6 d'extrémité, à savoir, d'une part un poussoir 6 le plus en avant dans le sens du flux, et, d'autre part, un poussoir 6 le plus en arrière dans le sens du flux. Ces deux poussoirs d'extrémité appartiennent respectivement aux moyens d'orientation 5 destinés à agir sur les premier et dernier produits 2 du lot.

Les autres poussoirs 6, après s'être escamotés pour permettre aux produits 2 de venir les uns contre les autres, peuvent ensuite venir dans une position intermédiaire, dans laquelle ils arrivent au niveau de l'interface entre deux produits 2 successivement sans toutefois les écarter. Cela permet en particulier de stabiliser les produits 2.

Les procédés selon l'invention peuvent aussi avoir une étape supplémentaire au cours de laquelle les produits 2 sont décalés, sous l'action des moyens d'orientation 5, transversalement à la direction de convoyage 4. Il est ainsi possible de diviser le flux de produits 2 en deux flux parallèles.

La rotation des produits 2 peut être d'un angle quelconque, en particulier d'un angle de 90 ou 45 degrés. Cette rotation s'accompagne cependant généralement d'un changement de dimension longitudinale. Comme il a déjà été dit, un moyen d'orientation 5 forme une paire de butées, l'une en direction de l'avant du flux et l'autre en direction de l'arrière. Le mouvement de rotation s'obtient par ailleurs en particulier grâce au fait que, dans la direction de convoyage 4, la distance entre ces deux butées est plus faible que la dimension du produit 2 à orienter. Au cours de la rotation du produit 2 autour d'un axe perpendiculaire au plan de convoyage 3, la dimension du produit 2, mesurée parallèlement à la direction de convoyage 4 peut varier, et les deux butées risquent alors ne plus être en contact avec le produit 2. Ce dernier est alors mal contrôlé. Il est donc avantageux que la distance entre les butées puisse être modifiée au cours de la manœuvre d'orientation. A cet effet, lorsque le moyen d'orientation 5 entre en fonctionnement, la distance entre les deux poussoirs 6 qu'il comprend, ou entre le poussoir 6 qu'il comprend et une autre butée, est modifiée par le déplacement de l'un quelconque de ces deux éléments.

On notera que la mobilité longitudinale, dans la direction de convoyage 4, du au moins un poussoir 6 ou moyen d'orientation 5, lui permet de se déplacer longitudinalement par rapport au convoyeur 10, et donc par rapport aux produits 2 qui sont posés sur lui et qu'il entraîne. Le au moins un poussoir 6 ne suit donc pas forcément exactement la position du convoyeur 10, mais peut se déplacer par rapport à lui dans la direction de convoyage 4 pour aller se positionner au niveau des produits 2, là où ils se trouvent réellement sur le convoyeur 10. La position longitudinale du au moins un poussoir 6 est donc adaptée à la position relative des produits 2 en amont, détectée grâce à la cellule de détection 9, et il en va de même pour le au moins un moyen d'orientation 5.

Lorsque le au moins un moyen d'orientation 5 ou poussoir 6 est monté dans un chariot 7 de façon mobile longitudinalement, sa position longitudinale peut être modifiée pour reproduire l'arrangement de la colonne de produits 2 en amont. Lorsque ledit au moins un moyen d'orientation 5 ou poussoir 6 est monté fixé longitudinalement dans un chariot 7, ce dernier est amené, comme il a été décrit, à fonctionner en sous vitesse ou en survitesse par rapport au convoyeur 10, et donc avec un mouvement longitudinal par rapport à ce dernier, pour agir successivement sur les produits 2 à partir de celui le plus en avance ou le plus en retard. Ce faisant, le au moins un moyen d'orientation 5, ou poussoir 6, est donc aussi déplacé longitudinalement par rapport au convoyeur 10. Enfin, si ledit au moins un moyen poussoir 6 ou moyen d'orientation 5 est monté sur une glissière longitudinale, sa position par rapport au convoyeur 10 est aussi ajustée en fonction de la position relative des produits 2 sur ledit convoyeur 10. Dans le cas particulier d'un seul moyen d'orientation 5, qui fonctionnerait alors de façon cyclique sur les produits 2 successifs, il conserve la possibilité d'un mouvement longitudinal relatif entre lui et le convoyeur 10, puisque, comme il a été dit, les produits 2 sur le convoyeur 10 ne sont pas nécessairement espacés de la même façon. Dans le cas où il s'agit de plusieurs moyens d'orientation 5 ou poussoirs 6 montés les uns à côté des autres sur une glissière 8 fixe ou équivalent, leur position réciproque est modifiée pour reproduire la position réciproque observée pour les produits 2 à traiter.

Cette mobilité relative par rapport au convoyeur 10 dans la direction de convoyage 4 se manifeste en particulier par la possibilité de positionner ledit au moins un poussoir 6 ou moyen d'orientation 5, dans la direction de convoyage 4, d'une façon correspondante à la position des produits 2 successifs, mais aussi par des possibles différences de vitesse entre ledit au moins un poussoir 6 ou moyen d'orientation 5 et les produits 2, comme une vitesse longitudinale des moyens d'orientation 5 ou poussoirs 6 qui est supérieure à la vitesse d'amenée des produits 2, ou encore une survitesse ou sousvitesse par rapport au flux de produits 2.

La détection des produits 2 effectuée à l'aide de la cellule de détection 9 permet alors, grâce à l'unité de contrôle, de synchroniser et donc de positionner le au moins moyen d'orientation 5 ou poussoir 6, de façon correspondante à l'organisation réelle des produits 2 et leur espacement, pour que le ou chaque moyen d'orientation 5 ou poussoir 6 soit déplacé, par rapport au convoyeur 10 et au flux de produits 2 qu'il génère, et amené en vis-à-vis du produit 2 à traiter, et ce qu'il soit monté pour être, par rapport au convoyeur 10, mobile lui-même ou par entraînement d'un chariot 7 dans lequel il est monté.

## Revendications

1. Dispositif de positionnement (1) pour positionner des produits (2) simultanément à leur convoyage les uns derrière les autres dans un plan de convoyage (3) sur un convoyeur (10) et le long d'une direction de convoyage (4), comprenant plusieurs moyens d'orientation (5), chacun traitant un produit (2), ces moyens d'orientation (5) étant montés côte à côte dans la direction de convoyage (4), et chacun étant destiné à agir sur un produit (2) différent entraîné par le convoyeur (10). chaque moyen d'orientation (5), comprenant lui-même au moins un poussoir (6) mobile le long d'un mouvement d'action entre une position inactive et une position active, ledit mouvement d'action ayant pour effet d'agir sur un produit (2) en le poussant pour le faire pivoter d'un angle prédéterminé autour d'un axe perpendiculaire au plan de convoyage (3), **caractérisé en ce que** le au moins un poussoir (6) est monté fixé dans la direction de convoyage (4) dans un chariot (7), lui-même mobile dans la direction de convoyage (4).

2. Dispositif selon la revendication 1, **caractérisé en ce que**
le chariot (7) est monté sur une glissière fixe avec une capacité de mouvement longitudinal de sorte à pouvoir se déplacer sensiblement à la même vitesse que le convoyeur (10).

3. Dispositif selon l'une quelconque des revendications 1 ou 2, **caractérisé en ce que** le au moins un moyen d'orientation (5) comprend une paire de poussoirs (6) similaires et placés en vis-à-vis l'un de l'autre, de sorte à agir ensemble sur le même produit (2).

4. Dispositif selon la revendication 3, **caractérisé en ce que**
la distance entre les deux poussoirs (6) de la paire du au moins un moyen d'orientation (5) est ajustable dans la direction de convoyage (4), grâce à une mobilité dans ladite direction d'au moins l'un des deux poussoirs (6).

5. Dispositif selon l'une quelconque des revendications 1 à 4, **caractérisé en ce que** il comprend au moins deux moyens d'orientation (5) montés côte à côte dans la direction de convoyage (4), les poussoirs (6) côte à côte étant entraînés par des actionneurs pilotables indépendamment.

6. Dispositif selon l'une quelconque des revendications 1 à 5, **caractérisé en ce que** il comprend une cellule de détection (9), montée en amont du au moins un moyen d'orientation (5) dans la direction de convoyage (4), pour détecter unitairement chaque produit (2) à orienter, ainsi qu'une unité de contrôle pour recevoir le signal de ladite cellule (9) et conditionner le fonctionnement du dispositif.

7. Procédé pour positionner des produits (2) simultanément à leur convoyage les uns derrière les autres dans un plan de convoyage (3) et le long d'une direction de convoyage (4), comprenant une étape d'orientation, lors de laquelle les produits (2) sont tournés autour d'un axe perpendiculaire au plan de convoyage (3), ladite étape d'orientation s'effectue en déplaçant au moins un poussoir (6) le long d'un mouvement d'action, entre une position inactive et une position active, ledit mouvement d'action ayant pour effet d'agir sur un produit (2) en le poussant pour le faire pivoter d'un angle prédéterminé autour d'un axe perpendiculaire au plan de convoyage (3), ledit mouvement d'action étant notamment parallèle au plan de convoyage (3) et perpendiculaire à la direction de convoyage (4) ; procédé **caractérisé en ce qu'**il comprend une étape de positionnement d'un chariot (7), comprenant plusieurs poussoirs (6) les uns à côté des autres dans la direction de convoyage (4), dans une position telle qu'un premier poussoir (6) se trouve en vis-à-vis d'un produit (2) à orienter, en particulier le plus en avance ou le plus en retard conformément à un schéma de référencement, le chariot (7) étant ensuite déplacé dans la direction de convoyage (4) et au moins un autre poussoir (6) étant actionné dès lors qu'il se trouve en vis-à-vis d'un autre produit (2).

8. Procédé selon la revendication 7, **caractérisé en ce que**
il comprend, en outre, une étape de positionnement longitudinal des produits (2), dans la direction de convoyage (4), de sorte à les positionner les uns par rapport aux autres à une distance prédéfinie.

9. Procédé selon l'une quelconque des revendications 7 ou 8, **caractérisé en ce que** l'étape d'orientation est mise en oeuvre lorsque le produit (2) arrive dans une zone fixe prédéfinie.

10. Procédé selon l'une quelconque des revendications 7 à 9 , **caractérisé en ce que** la position des produits (2) successifs est détectée en amont de l'étape d'orientation, le procédé comprenant une étape consistant essentiellement à positionner de façon correspondante dans la direction de convoyage (4) une pluralité de poussoirs (6) se trouvant côte à côte, et ce avant leur actionnement entre leur position inactive et leur position active.

11. Procédé selon l'une quelconque des revendications 7 à 10, **caractérisé en ce que** il comprend une étape consistant à décaler les produits (2) transversalement à la direction de convoyage (4) sous l'effet de l'action du au moins un poussoir (6).

## Patentansprüche

1. Positioniervorrichtung (1), um Produkte (2) bei ihrer Beförderung gleichzeitig hintereinander in einer Beförderungsebene (3) auf einer Fördereinrichtung (10) und entlang einer Beförderungsrichtung (4) zu positionieren, die mehrere Ausrichtungseinrichtungen (5) enthält, die je ein Produkt (2) verarbeiten, wobei diese Ausrichtungseinrichtungen (5) in der Beförderungsrichtung (4) nebeneinander montiert sind und jede dazu bestimmt ist, auf ein anderes von der Fördereinrichtung (10) angetriebenes Produkt (2) einzuwirken, wobei jede Ausrichtungseinrichtung (5) selbst mindestens einen Schieber (6) enthält, der entlang einer Wirkbewegung zwischen einer inaktiven Stellung und einer aktiven Stellung beweglich ist, wobei die Wirkbewegung zur Wirkung hat, auf ein Produkt (2) einzuwirken, indem es geschoben wird, um es um einen vorbestimmten Winkel um eine Achse lotrecht zur Beförderungsebene (3) schwenken zu lassen,
**dadurch gekennzeichnet, dass** der mindestens eine Schieber (6) in der Beförderungsrichtung (4) in einem Wagen (7) befestigt montiert ist, der selbst in der Beförderungsrichtung (4) beweglich ist.

2. Vorrichtung nach Anspruch 1, **dadurch gekennzeichnet, dass** der Wagen (7) auf eine ortsfeste Gleitschiene mit einer Längsbewegungsfähigkeit montiert ist, um sich im Wesentlichen mit der gleichen Geschwindigkeit wie die Fördereinrichtung (10) verschieben zu können.

3. Vorrichtung nach einem der Ansprüche 1 oder 2, **dadurch gekennzeichnet, dass** die mindestens eine Ausrichtungseinrichtung (5) ein Paar von Schiebern (6) enthält, die gleich und einander gegenüber angeordnet sind, um zusammen auf das gleiche Produkt (2) einzuwirken.

4. Vorrichtung nach Anspruch 3, **dadurch gekennzeichnet, dass** der Abstand zwischen den zwei Schiebern (6) des Paars der mindestens einen Ausrichtungseinrichtung (5) in der Beförderungsrichtung (4) mit Hilfe einer Beweglichkeit in der Richtung mindestens eines der zwei Schieber (6) einstellbar ist.

5. Vorrichtung nach einem der Ansprüche 1 bis 4, **dadurch gekennzeichnet, dass** sie mindestens zwei Ausrichtungseinrichtungen (5) enthält, die in der Beförderungsrichtung (4) nebeneinander montiert sind, wobei die nebeneinander befindlichen Schieber (6) von unabhängig steuerbaren Stellantrieben angetrieben werden.

6. Vorrichtung nach einem der Ansprüche 1 bis 5, **dadurch gekennzeichnet, dass** sie eine Erfassungszelle (9), die stromaufwärts vor der mindestens einen Ausrichtungseinrichtung (5) in der Beförderungsrichtung (4) montiert ist, um jedes auszurichtende Produkt (2) einzeln zu erfassen, sowie eine Kontrolleinheit enthält, um das Signal von der Zelle (9) zu empfangen und den Betrieb der Vorrichtung vorzugeben.

7. Verfahren zur Positionierung von Produkten (2) bei ihrer Beförderung gleichzeitig hintereinander in einer Beförderungsebene (3) und entlang einer Beförderungsrichtung (4), das einen Schritt der Ausrichtung enthält, während dessen die Produkte (2) um eine Achse lotrecht zur Beförderungsebene (3) gedreht werden,
wobei der Ausrichtungsschritt erfolgt, indem mindestens ein Schieber (6) entlang einer Wirkbewegung zwischen einer inaktiven Stellung und einer aktiven Stellung verschoben wird, wobei die Wirkbewegung zur Wirkung hat, auf ein Produkt (2) einzuwirken, indem es geschoben wird, um es um einen vorbestimmten Winkel um eine Achse lotrecht zur Beförderungsebene (3) schwenken zu lassen, wobei die Wirkbewegung insbesondere parallel zur Beförderungsebene (3) und lotrecht zur Beförderungsrichtung (4) ist;
wobei das Verfahren **dadurch gekennzeichnet ist, dass** es einen Schritt der Positionierung eines Wagens (7), der mehrere Schieber (6) nebeneinander in der Beförderungsrichtung (4) enthält, in einer derartigen Position enthält, dass ein erster Schieber (6) sich gegenüber einem auszurichtenden Produkt (2) befindet, insbesondere dem am weitesten vorne oder dem am weitesten hinten liegenden gemäß einem Referenzierungsschema, wobei der Wagen (7) anschließend in der Beförderungsrichtung (4) verschoben und mindestens ein anderer Schieber (6) betätigt wird, sobald er sich gegenüber einem anderen Produkt (2) befindet.

8. Verfahren nach Anspruch 7, **dadurch gekennzeichnet, dass** es außerdem einen Schritt der Längspositionierung der Produkte (2) in der Beförderungsrichtung (4) enthält, um sie zueinander in einem vorbestimmten Abstand zu positionieren.

9. Verfahren nach einem der Ansprüche 7 oder 8, **dadurch gekennzeichnet, dass** der Ausrichtungsschritt durchgeführt wird, wenn das Produkt (2) in einer vordefinierten ortsfesten Zone ankommt.

10. Verfahren nach einem der Ansprüche 7 bis 9, **dadurch gekennzeichnet, dass** die Position der aufeinanderfolgenden Produkte (2) stromaufwärts vor dem Ausrichtungsschritt erfasst wird, wobei das Verfahren einen Schritt enthält, der hauptsächlich darin besteht, eine Vielzahl von Schiebern (6), die sich nebeneinander befinden, entsprechend in der Beförderungsrichtung (4) zu positionieren, und dies vor ihrer Betätigung zwischen ihrer inaktiven Position und ihrer aktiven Position.

11. Verfahren nach einem der Ansprüche 7 bis 10, **dadurch gekennzeichnet, dass** es einen Schritt enthält, der darin besteht, die Produkte (2) unter der Wirkung der Einwirkung des mindestens einen Schiebers (6) quer zur Beförderungsrichtung (4) zu versetzen.

## Claims

1. Positioning device (1) for positioning products (2) simultaneously with their conveyance on a conveyor (10) one after the other in a plane of conveyance (3) and along a direction of conveyance (4),
comprising
several orientation means (5), each of them processing on a product (2), these orientation means (5) being mounted side by side in the direction of conveyance (4), and each of them being intended to act on a different product (2) driven by the conveyor (10), each orientation means (5) itself comprising at least one pusher (6) movable along an action movement between an inactive position and an active position, the effect of said action movement being to act on a product (2) by pushing it to make it pivot by a predetermined angle around an axis perpendicular to the plane of conveyance (3),
**characterized in that**
the at least one pusher (6) is mounted fixed in the direction of conveyance (4) in a carriage (7), which itself is movable in the direction of conveyance (4).

2. Device according to claim 1, **characterized in that**
the carriage (7) is mounted on a fixed guide rail with a capacity for longitudinal movement in such a way as to be able to be moved substantially at the same speed as the conveyor (10).

3. Device according to any one of claims 1 or 2, **characterized in that**
the at least one orientation means (5) comprises a pair of similar pushers (6) placed facing each other, so as to act together on the same product (2).

4. Device according to claim 3, **characterized in that**
the distance between the two pushers (6) of the pair of the at least one orientation means (5) is adjustable in the direction of conveyance (4), thanks to a mobility in said direction of at least one of the two pushers (6).

5. Device according to any one of claims 1 to 4, **characterized in that**
it comprises at least two orientation means (5), mounted side by side in the direction of conveyance (4), the side-by-side pushers (6) being driven by actuators that are independently controllable.

6. Device according to any one of claims 1 to 5, **characterized in that**
it comprises a detection cell (9) mounted upstream from the at least one orientation means (5) in the direction of conveyance (4), in order to detect, one by one, each product (2) to be oriented, as well as a control unit for receiving the signal from said cell (9) and conditioning the functioning of the device.

7. Method for positioning products (2) simultaneously with their conveyance one after another in a plane of conveyance (3) and along a direction of conveyance (4), comprising an orientation step, during which the products (2) are turned around an axis perpendicular to the plane of conveyance (3),
said orientation step is achieved by moving the at least one pusher (6) along an action movement, between an inactive position and an active position, the effect of said action movement being to act on a product (2) by pushing it to make it pivot by a predetermined angle around an axis perpendicular to the plane of conveyance (3), said action movement in particular being parallel to the plane of conveyance (3) and perpendicular to the direction of conveyance (4),
the method of which is **characterized in that**
it comprises a step of positioning a carriage (7), comprising a plurality of pushers (6) side by side in the direction of conveyance (4), in a position such that a first pusher (6) is located facing a product (2) to be oriented, in particular the farthest ahead or the farthest behind, according to a referencing scheme, the carriage (7) then being moved in the direction of conveyance (4) and at least one other pusher (6) being actuated as soon as it is located in front of another product (2).

8. Method according to claim 7, **characterized in that**
it further comprises a step of longitudinal positioning of the products (2), in the direction of conveyance (4), so as to position them with respect to each other at a predefined distance.

9. Method according to either of claims 7 or 8, **characterized in that**
the orientation step is implemented when the product (2) arrives in a predefined fixed zone.

10. Method according to any one of claims 7 to 9, **characterized in that**
the position of the successive products (2) is detected upstream from the orientation step, the method comprising a step consisting essentially of positioning, in a corresponding manner in the direction of conveyance (4), a plurality of pushers (6) located side by side, and this is done prior to their being actuated between their inactive position and their active position.

11. Method according to any one of claims 7 to 10, **characterized in that**
it comprises a step consisting of staggering the products (2) transversely in the direction of conveyance (4) under the effect of the action of the at least one pusher (6).
